# EUROPÄISCHE PATENTANMELDUNG

(11) **EP 4 464 496 A1**
(43) Veröffentlichungstag der Anmeldung: **20.11.2024**
(21) Anmeldenummer: 24175557.8
(22) Anmeldetag: 13.05.2024
(51) Int. Cl.: B29C 45/27, B29C 45/28

(54) **VERTEILER FÜR EIN HEISSKANALSYSTEM**

(30) Priorität: 16.05.2023 DE 102023112958
(71) Anmelder: Günther Heisskanaltechnik GmbH, 35066 Frankenberg (DE)
(72) Erfinder: Sommer, Siegrid, 35099 Burgwald (DE); Sommer, Stefan, 35099 Burgwald (DE); Schnell, Torsten, 35104 Lichtenfels (DE)
(74) Vertreter: Patentanwälte Olbricht Buchhold Keulertz

(57) **Zusammenfassung**

Die vorgestellte Erfindung betrifft einen Verteiler (100) für ein Heißkanalsystem zum Verarbeiten einer fließfähigen Masse, wobei der Verteiler (100) umfasst:
- einen Hauptverteiler (101), und
- einen seitlichen Verteiler (103), der dazu konfiguriert ist, seitlich benachbart neben dem Hauptverteiler (101) angeordnet zu werden und den Hauptverteiler (101) mit fließfähiger Masse zu versorgen,
- wobei der seitliche Verteiler (103) eine Schnittstelle (105) zur Kopplung mit einer Gegenschnittstelle (107) des Hauptverteilers (101) umfasst, und
- wobei der seitliche Verteiler (103) einen Fließkanal (150) umfasst, der aus einer ersten Richtung strömende Masse in eine zweite Richtung umlenkt.

## Beschreibung

Die vorgestellte Erfindung betrifft einen Verteiler für ein Heißkanalsystem gemäß den beigefügten Ansprüchen.

Heißkanal- oder Kaltkanalsysteme sind allgemein bekannt. Sie werden in Spritzgießwerkzeugen eingesetzt, um eine fließfähige Masse bei einer vorgebbaren Temperatur unter Druck einem trennbaren Werkzeugblock mit darin ausgebildeten Formeinsätzen (Formnestern oder Kavitäten) zuzuführen. Die fließfähige Masse wird über Verteilerkanäle einem oder mehreren materialführenden Rohren (Materialrohre) zugeführt, die jeweils endseitig über eine Düsenspitze, einem Düsenmundstück oder - bei Nadelverschlussdüsen - über eine Nadelführung in ein jeweils zugeordnetes Formnest in einem Formeinsatz münden. Die Formeinsätze sitzen meist in einer Formnestplatte oder bilden eine solche.

Insbesondere bei Systemen zum parallelen Spritzgießen mit mehreren Düsen, wie es bspw. bei der Herstellung von großflächigen Produkten erfolgt, ist es erforderlich, einen zu verschiedenen Düsen geleiteten Volumenstrom von fließfähiger Masse in seinen Fließeigenschaften und seiner Temperatur zu homogenisieren, um ein möglichst homogenes und entsprechend qualitativ hochwertiges Produkt herzustellen.

Vor diesem Hintergrund ist es eine Aufgabe der vorgestellten Erfindung, eine Möglichkeit zum formkorrekten Spritzgießen eines großflächigen Produkts bereitzustellen.

Es wird somit gemäß einem ersten Aspekt der vorgestellten Erfindung ein Verteiler für ein Heißkanalsystem zum Verarbeiten einer fließfähigen Masse vorgestellt.

Der Verteiler umfasst einen Hauptverteiler und einen seitlichen Verteiler. Der seitliche Verteiler ist dazu konfiguriert, seitlich benachbart neben dem Hauptverteiler angeordnet zu werden und den Hauptverteiler mit fließfähiger Masse zu versorgen, wobei der seitliche Verteiler eine Schnittstelle zur Kopplung mit einer Gegenschnittstelle des Hauptverteilers umfasst, und wobei der seitliche Verteiler einen Fließkanal umfasst, der aus einer ersten Richtung strömende Masse in eine zweite Richtung umlenkt.

Der vorgestellte Verteiler basiert auf einer Anordnung mit zwei Unterverteilern, nämlich dem Hauptverteiler, der insbesondere mit jeweiligen Düsenanordnungen verbunden ist bzw. die Düsen mit fließfähiger Masse versorgt, und dem seitlichen Verteiler. Der seitliche Verteiler ist mit dem Hauptverteiler fluidleitend gekoppelt, so dass dieser den Hauptverteiler mit fleißfähiger Masse aus einem Reservoir versorgt.

Der zweiteilige Aufbau des vorgestellten Verteilers ermöglicht eine von einer Form eines jeweiligen Heißkanalsystems unabhängige Ausgestaltung des Hauptverteilers, da der seitliche Verteiler derart angepasst bzw. angeordnet werden kann, dass dieser mit einem Reservoir des Heißkanalsystems koppelbar ist. Entsprechend kann ein standardisierter Hauptverteiler für verschiedene Formen von Heißkanalsystemen verwendet werden.

Ferner ermöglicht der zweiteilige Aufbau des vorgestellten Verteilers eine seitliche Versorgung des Hauptverteilers, d.h. insbesondere von einer kurzen Seite des Hauptverteilers, so dass ein Bauraum über dem Hauptverteiler frei ist, um bspw. weitere Bauteile des Heißkanalsystems, insbesondere einen Nadelantrieb dort anzuordnen.

Entsprechend kann vorgesehen sein, dass der Hauptverteiler eine Vielzahl Ausnehmungen zur Durchführung von Düsennadeln umfasst und dazu konfiguriert ist, über einer Düsenanordnung mit einer Vielzahl Düsennadeln angeordnet zu werden.

Mittels Ausnehmungen zur Durchführung von Düsennadeln kann der Verteiler über einer Düsenanordnung mit Düsennadeln bzw. einer Nadelführung angeordnet werden, so dass ein entsprechendes Heißkanalsystems besonders kompakt, insbesondere mit einer niedrigen Aufbauhöhe ausgestaltet werden kann.

Es kann weiterhin vorgesehen sein, dass der Hauptverteiler eine Vielzahl Ebenen umfasst, in denen unterschiedliche Fließkanalgeometrien ausgebildet sind.

Eine Vielzahl Ebenen mit unterschiedlichen Fließkanalgeometrien ermöglicht die Umsetzung einer bestmöglichen Balancierung, d.h. vergleichmäßigten Fließweglängen, auf einem minimalen Bauraum. Dabei können bspw. erste Fließkanäle vorgesehen sein, die über zweiten Fließkanälen angeordnet sind.

Es kann weiterhin vorgesehen sein, dass der Hauptverteiler eine erste Ebene und eine zweite Ebene umfasst, wobei in der ersten Ebene die Gegenschnittstelle in drei gleich lange Zuführkanäle mündet, und wobei in der zweiten Ebene drei Zuführkanäle ausgebildet sind, die jeweils zwei paarige Austrittsöffnungen zum Versorgen der Düsenanordnung umfassen. Zum Ausbilden mehrerer gleich langer Zuführkanäle können einzelne Zuführkanäle eine Verlängerung, wie bspw. eine Schleife bzw. eine Kurve ausbilden. Durch drei in der ersten Ebene gleich lange Zuführkanäle können jeweilige in der zweiten Ebene ausgebildete Zuführkanäle identisch ausgestaltet sein, so dass ein identischer Fluss bzw. Volumenstrom der fließfähigen Masse aus der zweiten Ebene in die Düsenanordnung erreicht wird.

Durch drei Zuführkanäle, die jeweils die jeweils zwei paarige Austrittsöffnungen ausbilden, können an zwölf Stellen Düsen versorgt werden. Dabei kann eine Austrittsöffnung eine Düse oder mehrere Düsen mit fließfähiger Masse versorgen.

Es kann weiterhin vorgesehen sein, dass die Gegenschnittstelle direkt in alle drei Zuführkanäle mündet und ein mittlerer Zuführkanal der drei Zuführkanäle eine Verlängerung ausbildet, so dass sämtliche Enden der drei Zuführkanäle auf einer Linie liegen und alle drei Zuführkanäle gleich lang sind.

Während bei einer Anordnung mit drei Zuführkanälen die beiden äußeren Zuführkanäle spiegelsymmetrisch und entsprechend gleich lang ausgestaltet werden können, muss der mittlere Zuführkanal über eine Verlängerung bspw. in Form einer Biegung bzw. Schleife, verlängert werden, um dieselbe Länge zu erreichen wie die beiden äußeren Zuführkanäle.

Es kann weiterhin vorgesehen sein, dass die Gegenschnittstelle über einen Zwischenkanal in die drei Zuführkanäle mündet und alle drei Zuführkanäle ausgehend von einer Anbindung an einen Verteilerkanal gerade verlaufen, wobei der Zwischenkanal dazu konfiguriert ist, einen durch die Gegenschnittstelle einströmenden Massestrom in zwei Teilströme aufzuteilen, und wobei der Zwischenkanal links und rechts eines mittleren Zuführkanals der drei Zuführkanäle und zwischen den Zuführkanälen in den Verteilerkanal mündet.

Ein Zwischenkanal ermöglicht eine gleichmäßige Aufteilung eines Massenstroms auf mehrere Verteilerkanäle.

Es kann weiterhin vorgesehen sein, der Hauptverteiler und/oder der seitliche Verteiler ein Heizelement umfasst.

Ein Heizelement ermöglicht ein Einstellen einer Temperatur des Verteilers und, dadurch bedingt, einer durch den Verteiler fließenden Masse, so dass die Masse stets fließfähig gehalten werden kann bzw. eine beim Durchströmen des Verteilers aus der Masse entwichene thermische Energie der Masse wieder zugeführt wird.

Es kann weiterhin vorgesehen sein, dass die Schnittstelle des seitlichen Verteilers als Übergabehülse ausgestaltet ist und einen Dichtring umfasst, der die Verbindung zwischen Hauptverteiler und seitlichem Verteiler abdichtet.

Eine Hülse ermöglicht ein reversibles an- und abkoppeln des seitlichen Verteilers an den Hauptverteiler bzw. von dem Hauptverteiler. Um fertigungsbedingte Materialtoleranzen auszugleichen und entsprechend einen dichten Sitz des seitlichen Verteilers an dem Hauptverteiler sicherzustellen, hat sich ein Dichtring als geeignetes Mittel erwiesen.

Es kann weiterhin vorgesehen sein, dass der Hauptverteiler 96 Ausnehmungen zur Durchführung von Düsennadeln umfasst.
96 Ausnehmungen ermöglichen eine Anordnung des Verteilers auf einer Düsenanordnung mit 96 Düsen zur Herstellung einer 96-Wellplatte bzw. well-plate, wie sie im Laborbetrieb typisch sind, in einem one-shot Verfahren.

Gemäß einem zweiten Aspekt betrifft die vorgestellte Erfindung ein Spritzgusssystem mit einer möglichen Ausgestaltung des vorgestellten Verteilers.

Durch den vorgestellten Verteiler kann das vorgestellte Spritzgusssystem besonders kompakt, insbesondere besonders flach ausgestaltet werden.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine mögliche Ausgestaltung des vorgestellten Verteilers an einer Düsenanordnung,
- Fig. 2: eine erste Ausgestaltung des Verteilers gemäß Fig. 1 in einer durch eine erste Ebene geschnittenen Draufsicht,
- Fig. 3: der Verteiler gemäß Fig. 2 in einer durch eine zweite Ebene geschnittenen Draufsicht,
- Fig. 4: eine Detaildarstellung von in dem Verteiler gemäß Figuren 2 und 3 ausgebildeten Zuführkanälen in einer 3D-Ansicht,
- Fig. 5: eine zweite Ausgestaltung des Verteilers gemäß Fig. 1 in einer durch eine erste Ebene geschnittenen Draufsicht,
- Fig. 6: eine Detaildarstellung von in dem Verteiler gemäß Figuren 5 und 6 ausgebildeten Zuführkanälen in einer 3D-Ansicht.

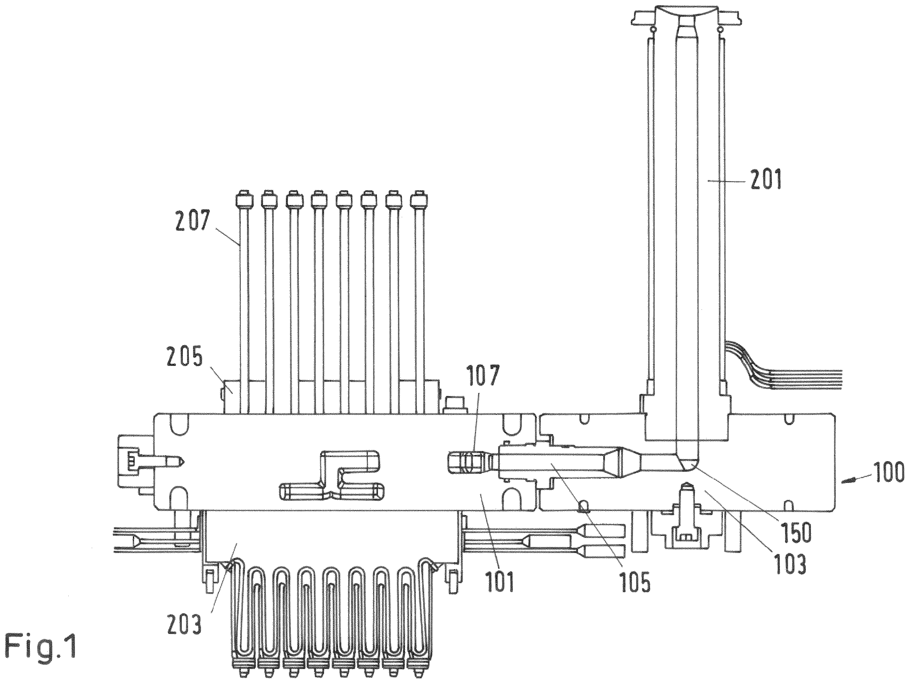

In Fig. 1 ist ein Verteiler 100 zum Verteilen einer fließfähigen Masse in einem Heißkanalsystem dargestellt.

Der Verteiler 100 umfasst einen Hauptverteiler 101 und einen seitlichen Verteiler 103.

Der seitliche Verteiler 103 ist über eine Schnittstelle 105 mit einer Gegenschnittstelle 107 in dem Hauptverteiler 101 fluidleitend gekoppelt, so dass durch eine Zuführeinrichtung 201 in den seitlichen Verteiler 103 fließende Masse über einen Fließkanal 150, die Schnittstelle 105 und die Gegenschnittstelle 107 in den Hauptverteiler 101 geleitet werden kann.

Der Hauptverteiler 101 ist mit einer Düsenanordnung 203 fluidleitend gekoppelt, so dass durch den Hauptverteiler 101 fließende Masse in die Düsenanordnung 203 geleitet werden kann.

Über die Düsenanordnung 203 kann die Masse in eine Form zum Formen eines Formteils geleitet werden. Zum Steuern eines Flusses von Masse durch die Düsenanordnung 203 ist ein Nadelantrieb 205 vorgesehen, der Düsennadeln 207 anhebt oder absenkt, um die Düsen der Düsenanordnung 203 freizugeben oder zu verschließen.

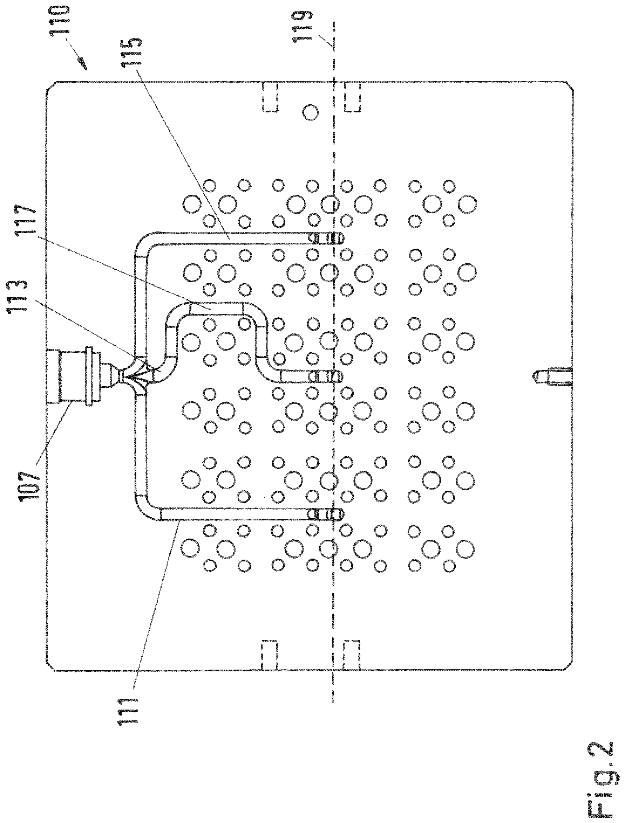

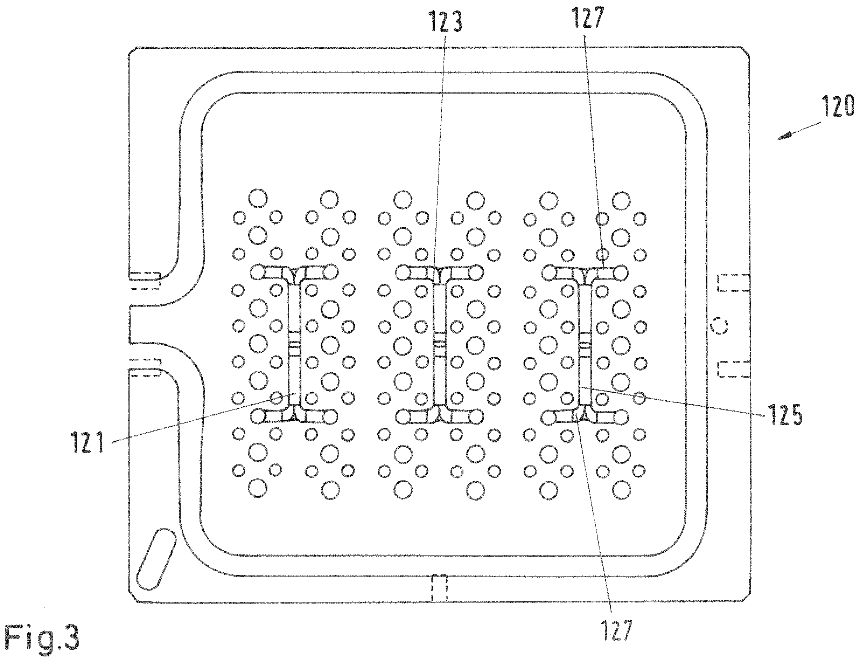

In Fig. 2 ist eine erste bzw. obere Ebene 110 des Verteilers 100 dargestellt. Hier ist erkennbar, dass die Gegenschnittstelle 107 direkt in drei Zuführkanäle 111, 113 und 115 mündet und ein mittlerer Zuführkanal 113 der drei Zuführkanäle 111, 113 und 115 eine Verlängerung 117 ausbildet, so dass die Enden der drei Zuführkanäle 111, 113 und 115 auf einer Linie 119 liegen und alle drei Zuführkanäle 111, 113 und 115 gleich lang sind und eine in Fig. 3 dargestellte zweite bzw. untere Ebene 120 gleichmäßig mit fließfähiger Masse versorgen.

In Fig. 3 ist die zweite bzw. untere Ebene 120 des Verteilers 100 dargestellt. Hier ist erkennbar, dass drei Zuführkanäle 121, 123 und 125 ausgebildet sind, die jeweils zwei paarige Austrittsöffnungen 127 zum Versorgen der Düsenanordnung 203 umfassen. Aufgrund der gleich langen Zuführkanäle 111, 113 und 115 und der dadurch bedingten gleichmäßigen Versorgung mit fließfähiger Masse sind die drei Zuführkanäle 121, 123 und 125 identisch zueinander ausgebildet.

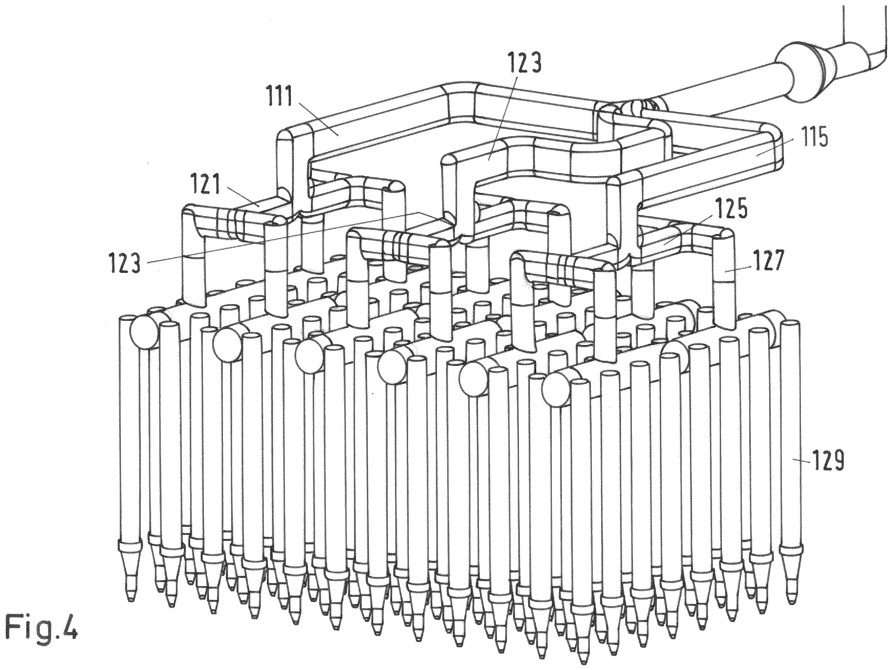

In Fig. 4 sind die Zuführkanäle 111, 113 und 115 und die Zuführkanäle 121, 123 und 125 sowie durch jeweilige Austrittsöffnungen 127 versorgte Düsenkanäle 129 dargestellt.

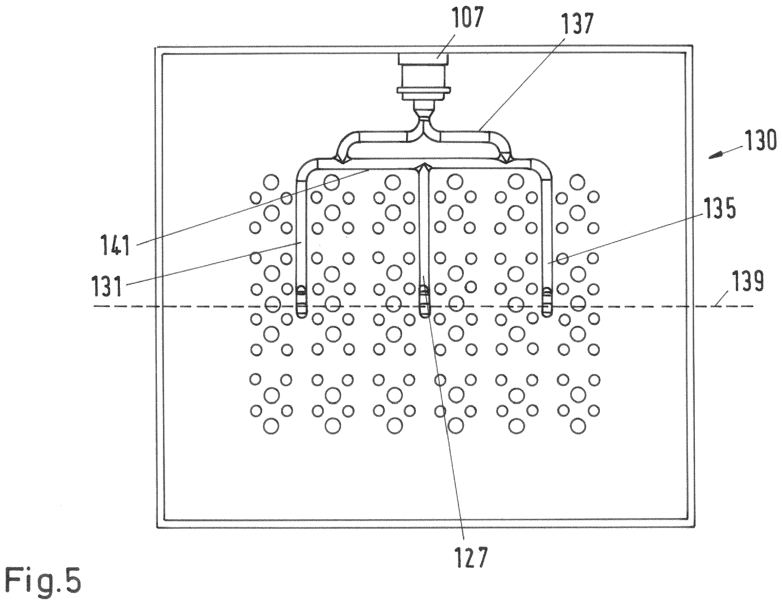

In Fig. 5 ist eine erste bzw. obere Ebene 130 des Verteilers 100 dargestellt. Hier ist erkennbar, dass drei Zuführkanäle 131, 133 und 135 über einen Zwischenkanal 137 mit der Gegenschnittstelle 107 gekoppelt sind und alle drei Zuführkanäle 131, 133 und 135 ausgehend von einer Anbindung an einen Verteilerkanal 139 gerade verlaufen und gleich lang sind, so dass die Enden der drei Zuführkanäle 131, 133 und 135 auf einer Linie 139 liegen.

Der Zwischenkanal 137 teilt somit einen durch die Gegenschnittstelle 107 einströmenden Massestrom in zwei Teilströme auf.

Der Zwischenkanal 137 mündet links und rechts des mittleren Zuführkanals 133 und zwischen den Zuführkanälen 131 und 135 in den Verteilerkanal 141, so dass ein Bypass des mittleren Zuführkanals 133 ausgeschlossen ist, bzw. der Zuführkanal 133 verlässlich mit fließfähiger Masse versorgt wird.

Die unter der ersten Ebene 130 angeordnete bzw. ausgebildete zweite Ebene 120 ist aufgrund der gleichen Länge und der dadurch bedingt gleichen Volumenflüsse durch die drei Zuführkanäle 131, 133 und 135 identisch zu der in Fig. 2 dargestellten Ebene 120.

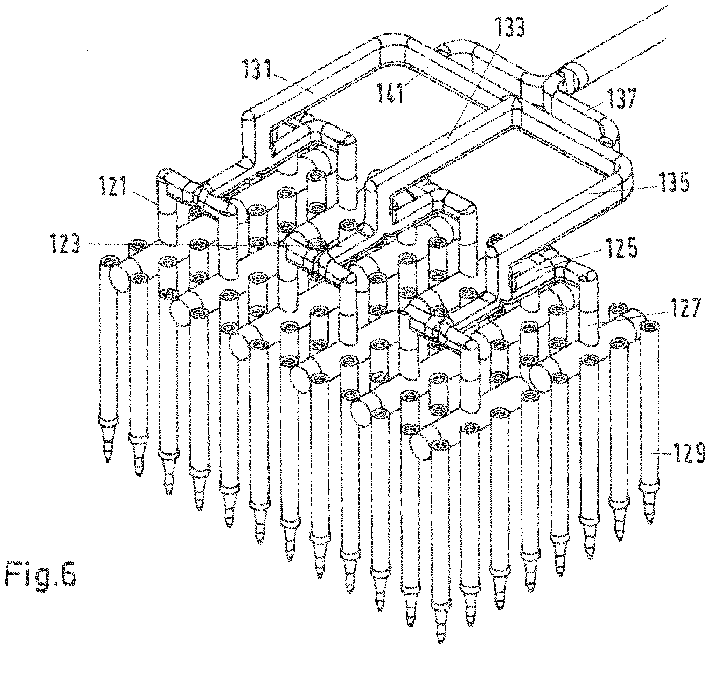

In Fig. 6 sind die Zuführkanäle 131, 133 und 135 und die Zuführkanäle 121, 123 und 125 sowie durch jeweilige Austrittsöffnungen 127 versorgte Düsenkanäle 129 dargestellt.

Ferner sind der Zwischenkanal 137 und der Verteilerkanal 141 dargestellt, durch die fließfähige Masse in die Düsenkanäle 129 geleitet wird.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

| | | | |
|---|---|---|---|
| 100 | Verteiler | 125 | Zuführkanal |
| 101 | Hauptverteiler | 127 | Austrittsöffnung |
| 103 | seitlicher Verteiler | 129 | Düsenkanal |
| 105 | Schnittstelle | 130 | Ebene |
| 107 | Gegenschnittstelle | 131 | Zuführkanal |
| 110 | Ebene | 133 | Zuführkanal |
| 111 | Zuführkanal | 135 | Zuführkanal |
| 113 | Zuführkanal | 137 | Zwischenkanal |
| 115 | Zuführkanal | 139 | Linie |
| 117 | Verlängerung | 141 | Verteilerkanal |
| 119 | Linie | 203 | Düsenanordnung |
| 120 | Ebene | 205 | Nadelantrieb |
| 121 | Zuführkanal | 207 | Düsennadeln |
| 123 | Zuführkanal | | |

## Patentansprüche

1. Verteiler (100) für ein Heißkanalsystem zum Verarbeiten einer fließfähigen Masse,
wobei der Verteiler (100) umfasst:
- einen Hauptverteiler (101), und
- einen seitlichen Verteiler (103), der dazu konfiguriert ist, seitlich benachbart neben dem Hauptverteiler (101) angeordnet zu werden und den Hauptverteiler (101) mit fließfähiger Masse zu versorgen,
- wobei der seitliche Verteiler (103) eine Schnittstelle (105) zur Kopplung mit einer Gegenschnittstelle (107) des Hauptverteilers (101) umfasst, und
- wobei der seitliche Verteiler (103) einen Fließkanal (150) umfasst, der aus einer ersten Richtung strömende Masse in eine zweite Richtung umlenkt.

2. Verteiler (100) nach Anspruch 1, **dadurch gekennzeichnet, dass** der Hauptverteiler (101) eine Vielzahl Ausnehmungen zur Durchführung von Düsennadeln (207) umfasst und dazu konfiguriert ist, über einer Düsenanordnung (203) mit einer Vielzahl Düsennadeln (207) angeordnet zu werden.

3. Verteiler (100) nach einem der voranstehenden Ansprüche, **dadurch gekennzeichnet, dass** der Hauptverteiler (101) eine Vielzahl Ebenen (110, 120, 130) umfasst, in denen unterschiedliche Zuführkanalgeometrien ausgebildet sind.

4. Verteiler (100) nach Anspruch 3, **dadurch gekennzeichnet,**
**dass** der Hauptverteiler (101) eine erste Ebene (110, 130) und eine zweite Ebene (120) umfasst,
wobei in der ersten Ebene (110) die Gegenschnittstelle (107) in drei gleich lange Zuführkanäle (111, 113, 115) mündet, und
wobei in der zweiten Ebene (120) drei Zuführkanäle (121, 123, 133) ausgebildet sind, die jeweils zwei paarige Austrittsöffnungen (127) zum Versorgen der Düsenanordnung (203) mit fließfähiger Masse umfassen.

5. Verteiler (100) nach Anspruch 4, **dadurch gekennzeichnet, dass** die Gegenschnittstelle (107) direkt in alle drei Zuführkanäle (111, 113, 115) mündet und ein mittlerer Zuführkanal (113) der drei Zuführkanäle (111, 113, 115) eine Verlängerung (117) ausbildet, so dass sämtliche Enden der drei Zuführkanäle (111, 113, 115) auf einer Linie (119) liegen und alle drei Zuführkanäle (111, 113, 115) gleich lang sind.

6. Verteiler (100) nach Anspruch 4, **dadurch gekennzeichnet, dass** die Gegenschnittstelle (107) über einen Zwischenkanal (137) mit den drei Zuführkanälen (131, 133, 135) gekoppelt ist und alle drei Zuführkanäle (131, 133, 135) ausgehend von einer Anbindung an einen Verteilerkanal (141) gerade verlaufen, wobei der Zwischenkanal (137) dazu konfiguriert ist, einen durch die Gegenschnittstelle (107) einströmenden Massestrom in zwei Teilströme aufzuteilen, und wobei der Zwischenkanal (137) links und rechts eines mittleren Zuführkanals (133) der drei Zuführkanäle (131, 133, 135) und zwischen den Zuführkanälen (131, 133, 135) in den Verteilerkanal (141) mündet.

7. Verteiler (100) nach einem der voranstehenden Ansprüche, **dadurch gekennzeichnet, dass** der Hauptverteiler (101) und/oder der seitliche Verteiler (103) ein Heizelement umfasst.

8. Verteiler (100) nach einem der voranstehenden Ansprüche, **dadurch gekennzeichnet, dass** die Schnittstelle (105) des seitlichen Verteilers (103) als Übergabehülse ausgestaltet ist und einen Dichtring umfasst, der die Verbindung zwischen Hauptverteiler (101) und seitlichem Verteiler (103) abdichtet.

9. Verteiler (100) nach einem der voranstehenden Ansprüche, **dadurch gekennzeichnet, dass** der Hauptverteiler (101) 96 Ausnehmungen zur Durchführung von Düsennadeln umfasst.

10. Heißkanalsystem,
wobei das Heißkanalsystem einen Verteiler (100) nach einem der Ansprüche 1 bis 9 umfasst.
